# EUROPEAN PATENT APPLICATION

(11) **EP 4 818 013 A1**
(43) Date of publication of application: **07.10.2026**
(21) Application number: 25305503.2
(22) Date of filing: 04.04.2025
(51) Int. Cl.: B62D 57/024, B62D 57/032, B64G 1/00, B25J 5/00, B25J 9/00

(54) **A MODULAR RECONFIGURABLE MULTI-LIMB ROBOT FOR IN-ORBIT SERVICING**

(71) Applicant: ROVIAL SAS, 31770 Colomiers (FR)
(72) Inventor: PANDEY, Amit Kumar, 31770 Colomiers (FR); RASAKATLA, Sriranjan, 31770 Colomiers (FR)
(74) Representative: Cabinet Beau de Loménie

(57) **Abstract**

A multi-limb robot (110) designed to navigate large structures (116) in space without requiring any specific structure shape or attachment receptacle on the structure (116) includes a base platform (102) having a plurality of docking units (206). Two or more robotic limbs (104) are coupled to the base platform (102) via the docking units (216). A locomotion end effector (112) is attached to the distal end of each one of the robotic limbs (104). The locomotion end effectors (112) are independently configured for holding onto elements of a structure (116) in space to achieve locomotion in different directions. Alternatively, a tool end effector (522) may be attached to the distal end of the limb (104) so that the limb (104) can be interchangeably used as a leg or an arm. This innovative approach enhances the robot's mobility and adaptability in space, providing a practical solution for tasks involving large structures in a space environment.

## Description

### BACKGROUND

### Field of the Art

The present disclosure is related to the field of space robotics. In particular, the present invention is related to robots configured for in-orbit servicing, maintenance, and assembly tasks within the space industry.

### Discussion of the State of the Art

The field of space exploration and maintenance has seen significant advancements in recent years, particularly in the area of robotics. These advancements have been instrumental in performing tasks that are either too dangerous or impractical for humans to undertake. However, a persistent challenge in this field is the limited reach and mobility of robots for in-orbit serving missions. These robots are often required to perform tasks such as assembly, maintenance, repair, and extension of large structures in space.

The current robotic solutions are typically fixed arm robots, which are limited by their reach and inability to move on the large structures. These robots are anchored at a base and their range of operation is restricted to the length of their arm and the extent of their rotation. This significantly limits their utility in performing tasks on large structures, as they can only work within a certain radius from their base.

Furthermore, these robotic solutions need to be able to adapt to structures of various shapes and sizes. The design of these structures should not be constrained by the capabilities of the robot. However, the current robotic solutions are not designed with this adaptability in mind. They are typically designed to work on structures with a specific shape and size, and cannot be easily adapted to work on structures of different dimensions.

There have been attempts to design robots that can move on structures in space. Some of these solutions involve the use of customized lattice structures or specific anchoring points or receptacles that the robot can attach to and move along. However, these solutions are not without their limitations. The use of customized lattice structures or specific anchoring points necessitates the design of the structure to cater to the robot, which can limit the design possibilities for the structure. Moreover, these solutions are not scalable, as the robots are designed to move only on a particular shape and size of the structure module. In addition, these solutions do not facilitate the robot switching from one locomotion modality to another.

In summary, there is a clear and unmet need for a robotic solution that can overcome the limitations of current in-orbit servicing robots. This solution should be able to move on large structures in space, adapt to structures of various shapes and sizes without constraining the design of the structure, and be scalable to different structures.

### SUMMARY

The present invention is a multi-limb robot that provides a solution to the limitations of current in-orbit servicing robots. The multi-limb space robot in accordance with the present invention is designed specifically for in-orbit servicing tasks, featuring multiple limbs with several degrees of freedom each, equipped with varying end effectors, such as grippers, wheels, hybrid locomotion mechanism, tools, and the like. This design enables the robot to move with versatility on large structures, such as those built with tubes or rails, without imposing tight constraints on the shape and size of one modular block of the structure.

The robot's locomotion mechanism allows for seamless motion and changes in direction on the structure, significantly enhancing its mobility and adaptability. The robot's architecture allows for the integration of AI and embedded control and perception algorithms, enabling real-time situation assessment and motion planning.

Each limb of the robot is modular and articulated and designed to be controlled independently. In addition to the base platform housing some of the major components necessary for operating the robot (such as sensors, computers, and the like), each limb is also equipped with its own sensors, actuators, communication, and control systems. This design allows for the construction of a multi-limb robot, enabling simultaneous and coordinated movements of each limb during complex tasks. The limb modularity also facilitates easy maintenance and repair, and introduces redundancy in the system to avoid single-point failure.

The robot's architecture allows for the embedding of various sensors in different parts of the robot. These sensors, along with sophisticated control and perception algorithms, enable autonomous decision-making and real-time situational awareness. The robot can analyze sensor data, including visual and tactile feedback, to assess its environment and plan optimal motion trajectories for achieving task objectives.

The limbs of the robot are used to navigate the structure, with sensors like cameras to detect where there is a structure element so that it can hold it and travel on it. The robot may also include a payload arm for performing functions such as fetching the structure assembly component from the spacecraft, placing it at the end of the structure, and assembling it to increase the structure's size.

The robot is powered by an onboard battery power management system and may return to the spacecraft for battery charging. It also keeps track of its desired pose using data from several sensors, including but not limited to an inertial measurement unit (IMU) module. The motion and planning algorithms are run on a single board computer, secondary microcontrollers, FPGA, ASIC, GPU, APU, camera/AI edge computing devices, and/or the like on the robot while communicating with the spacecraft over communication links.

The robot in accordance with the present invention provides numerous benefits, including enhanced mobility that allows the robot to travel anywhere in the satellite and large structure, increased scalability and adaptability for various in-orbit servicing scenarios, and greater multitasking through a single solution, as the same limb can be used as a leg or an arm. The onboard computational resources, including dedicated processors and memory modules, support the execution of complex control and AI algorithms. The AI algorithms may be specifically designed for zero gravity conditions and for the lighting conditions in space. The robot may use sensors like IMU and attitude and heading reference system (AHRS) on its modular units to stabilize the stance of the leg and thus gripper orientation, estimating disturbances such as reactions, vibrations, and unforeseen tilting for the right compensation strategy and control.

In one example, the present invention is a mult-limb robot that includes a base platform having a plurality of docking units. The base platform may include a power source, a power management module, a single board computer, a communication unit, an inertial measurement unit, a controller unit, and a thermal management module. Each one of the docking units may be an active docking unit or a passive docking unit.

The robot further includes at least two robotic limbs. Each robotic limb has a distal end and a proximal end configured for being removably attached to one of the docking units on the base platform. Each one of the robotic limbs may have one or more joints and actuators positioned between the distal end and the proximal end. The joints and actuators may be configured to provide desired degrees of freedom for the robotic limb. The at least two robotic limbs may include a first robotic limb having a first number of degrees of freedom, and a second robotic limb having a second number of degrees of freedom, and the first number may be different from the second number. The multi-limb robot may include at least four robotic limbs.

The robot further includes at least two locomotion end effectors. Each one of the locomotion end effectors is coupled to the distal end of a respective one of the robotic limbs. Each locomotion end effector is independently configured for holding onto elements of a structure in space to achieve locomotion in different directions. Each one of the locomotion end effectors may include a gripper, a clamp, a wheel, or a combination thereof. Each one of the locomotion end effectors may be a pincer gripper. The at least two locomotion end effectors may be claws, clamps, fingers, or clips, and may be configured for grasping tubular elements. The distal end of each one of the robotic limbs may include an end effector docking unit and the locomotion end effectors may be coupled to the distal end of the robotic limb through the end effector docking unit such that the locomotion end effectors are interchangeable.

The multi-limb robot may further include a robotic arm removably coupled to one of the docking units on the base platform. The robotic arm may have a robotic arm distal end and a tool end effector may be removably coupled to the robotic arm distal end. The tool end effector may include a gripper, a camera, a screw driver, a hammer, or a laser module.

The mult-limb robot may further include a thermal management system configured for maintaining a temperature of the robot within a desired range. The thermal management system may include at least one temperature sensor and at least one temperature controller. The temperature controller may be a Peltier device, heat pipe, heat pipe with radiator, a heat pipe with cooling fluid, or a combination thereof. The mult-limb robot may further include a communication module configured for transmitting information to and receiving information from a spacecraft associated with the robot.

In summary, the robot in accordance with the present invention revolutionizes in-orbit servicing tasks, providing a highly adaptable, scalable, and autonomous solution that significantly enhances the mobility and versatility of space robots.

### BRIEF DESCRIPTION OF THE DRAWINGS

The accompanying drawings illustrate several embodiments and, together with the description, serve to explain the principles of the invention according to the embodiments. It will be appreciated by one skilled in the art that the particular arrangements illustrated in the drawings are merely exemplary and are not to be considered as limiting of the scope of the invention or the claims herein in any way.
Fig. 1 illustrates a multi-limb modular robot, in accordance with one embodiment of the present invention.
Fig. 2 illustrates a base platform of the multi-limb modular robot, in accordance with one embodiment of the present invention.
Figs. 3A and 3B illustrate an example of a docking unit and a docking connector used to couple a robotic limb to the base platform of the multi-limb modular robot, in accordance with one embodiment of the present invention.
Fig. 4A illustrates a robotic limb, in accordance with one embodiment of the present invention.
Fig. 4B illustrates a base platform with four robotic limbs coupled thereto with one of the robotic limbs being different from the others, in accordance with one embodiment of the present invention.
Fig. 5A illustrates examples of gripper end effectors that may be coupled to the distal ends of the robotic limbs, in accordance with one embodiment of the present invention.
Fig. 5B illustrates an example of locomotion end effector that includes wheels and a clamp that may be coupled to the distal ends of the robotic limbs, in accordance with one embodiment of the present invention.
Fig. 5C illustrates examples of tool end effectors that may be coupled to the distal ends of the robotic limbs, in accordance with one embodiment of the present invention.

### DETAILED DESCRIPTION

The present invention is for a multi-limb robot designed for in-orbit servicing missions, equipped with modular limbs and advanced end effectors to perform intricate tasks in space environments. The invention is described by reference to various elements herein. It should be noted, however, that although the various elements of the inventive apparatus are described separately below, the elements need not necessarily be separate. The various embodiments may be interconnected and may be cut out of a singular block or mold. The variety of different ways of forming an inventive apparatus, in accordance with the disclosure herein, may be varied without departing from the scope of the invention.

Generally, one or more different embodiments may be described in the present application. Further, for one or more of the embodiments described herein, numerous alternative arrangements may be described; it should be appreciated that these are presented for illustrative purposes only and are not limited to the embodiments contained herein or the claims presented herein in any way. One or more of the arrangements may be widely applicable to numerous embodiments, as may be readily apparent from the disclosure. In general, arrangements are described in sufficient detail to enable those skilled in the art to practice one or more of the embodiments, and it should be appreciated that other arrangements may be utilized and that structural changes may be made without departing from the scope of the embodiments. Particular features of one or more of the embodiments described herein may be described with reference to one or more particular embodiments or figures that form a part of the present disclosure, and in which are shown, by way of illustration, specific arrangements of one or more aspects. It should be appreciated, however, that such features are not limited to usage in the one or more particular embodiments or figures with reference to which they are described. The present disclosure is neither a literal description of all arrangements of one or more of the embodiments nor a listing of features of one or more of the embodiments that must be present in all arrangements

Headings of sections provided in this patent application and the title of this patent application are for convenience only and are not to be taken as limiting the disclosure in any way.

Devices and parts that are connected to each other need not be in continuous connection with each other, unless expressly specified otherwise. In addition, devices and parts that are connected with each other may be connected directly or indirectly through one or more connection means or intermediaries.

A description of an aspect with several components in communication with each other does not imply that all such components are required. To the contrary, a variety of optional components may be described to illustrate a wide variety of possible embodiments and in order to more fully illustrate one or more embodiments. Similarly, although process steps, method steps, algorithms or the like may be described in a sequential order, such processes, methods and algorithms may generally be configured to work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the embodiments, and does not imply that the illustrated process is preferred. Also, steps are generally described once per aspect, but this does not mean they must occur once, or that they may only occur once each time a process, method, or algorithm is carried out or executed. Some steps may be omitted in some embodiments or some occurrences, or some steps may be executed more than once in a given aspect or occurrence.

When a single device or article is described herein, it will be readily apparent that more than one device or article may be used in place of a single device or article. Similarly, where more than one device or article is described herein, it will be readily apparent that a single device or article may be used in place of the more than one device or article.

The functionality or the features of a device may be alternatively embodied by one or more other devices that are not explicitly described as having such functionality or features. Thus, other embodiments need not include the device itself.

Techniques and mechanisms described or referenced herein will sometimes be described in singular form for clarity. However, it should be appreciated that particular embodiments may include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of various embodiments in which, for example, functions may be executed out of order from that shown or discussed, including substantially concurrently or in reverse order, depending on the functionality involved, as would be understood by those having ordinary skill in the art.

### Apparatus

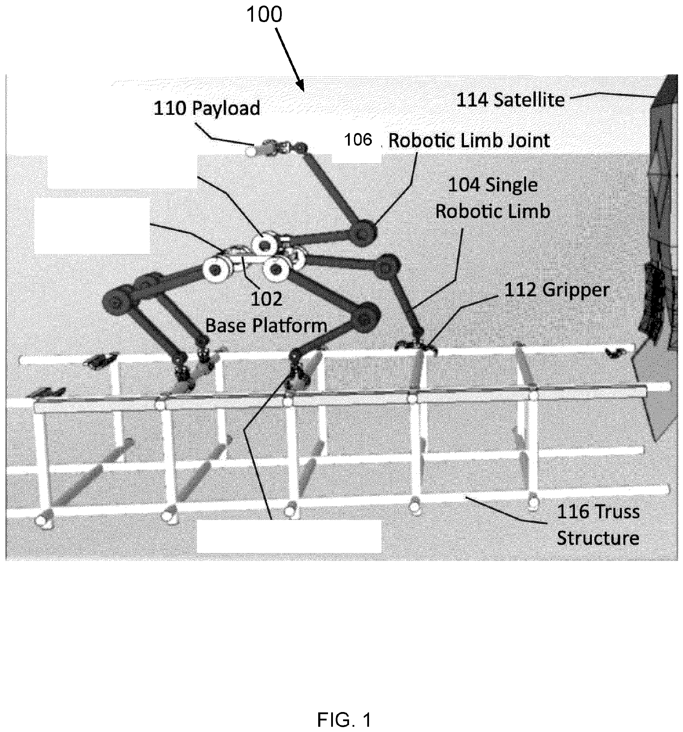

A multi-limb robot 100 for in-orbit servicing missions on a spacecraft 114 is depicted in Fig. 1. The robot 100 includes a base platform 102, a plurality of robotic limb units 104, and a robotic gripper unit 112 at the end of each limb 104. The limbs 104 include joints 106 and actuators (i.e., motors) to achieve desired degrees of freedom for each limb 104. The capability of having multiple limbs 104 is advantageous for adding redundancy in the system. For example, if one limb is not functional, the robot 100 will still be able to navigate back to the base station with the remaining functional limbs. The robotic gripper units 112 are interchangeable and are configured for grasping the structures 116 and/or payload 110. These components work together synergistically to enable the robot 100 to move on large structures 116 in space with enhanced versatility and efficiency. The robot 100 is designed to operate autonomously with an on-board AI system and interact with its environment which includes structures 116, primarily by receiving mission commands from a base station located in the spacecraft 114. The robot's autonomous operation allows it to navigate and perform tasks on its own, following predefined mission instructions. Additionally, in certain scenarios, a human operator may have the capability to teleoperate the robot 100, providing manual control and intervention as needed. This feature enables flexibility in the robot's operation, allowing for human oversight and intervention in specific situations while still primarily functioning autonomously.

The robot 100 is configured to move along structures 116 by grasping the structures 116 using the gripper end effectors 112. The structures 116 attached to the outside of the spacecraft 114 already exist and are already in use. For example, the structures 116 may include rails, railings, handles, truss structures, or the like. One advantage of the robot 100 is that the robot 100 does not require any specialized docking mechanisms, anchors, or attachment receptacles in order to move around on the spacecraft 114 since the robot 100 is configured to utilize existing structures 116 to move to any desired location on the spacecraft 114.

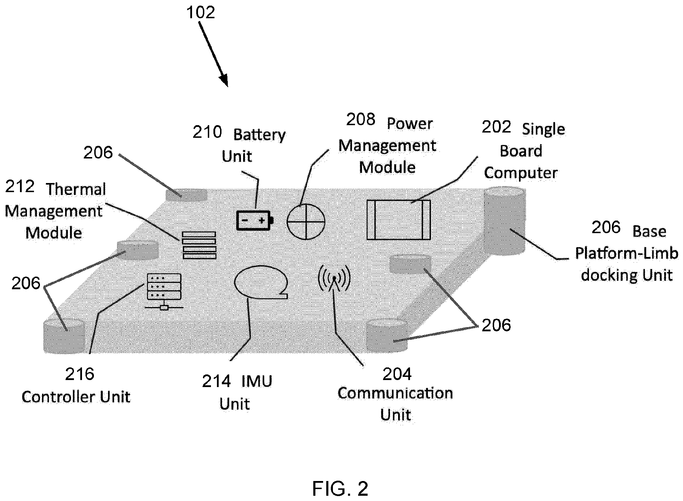

As shown in Fig. 2, the base platform 102 serves as the central hub for the robot 100, housing the necessary computational and communication components. The base platform 102 includes a single board computer 202, which acts as the primary computational unit. Depending on the mission requirements and the need for redundancy, additional single board computers may be integrated into the platform 102. These computers 202 may operate on real-time operating systems equipped with watchdog timers.

The base platform 102 also includes a communication unit 204 for facilitating communication between different parts of the robot 100, including the exchange of commands and status updates. The communication unit 204 may include redundant wired and wireless communication systems, including but not limited to, wifi, Bluetooth, 10 GHz, 5 GHz, ethercat, space wire, and LiFi. The communication unit 204 also allows the robot 100 to communicate with the spacecraft 114.

Docking units 206 are fitted onto the base platform 102, allowing for the attachment of the robotic limbs 104. The docking units 206 may be active or passive plug-and-play connectors for the robotic arms and legs 104, providing mechanical, thermal, data, and power interfaces. Although the platform 102 is depicted having six docking units 206, it will be well understood by one of ordinary skill in the art that the platform 102 may alternatively include 2, 3, 4, 5, 7, or more docking units 206, depending on how many limbs 104 may be needed to attach to the platform 102 to enable the robot 100 to effectively maneuver and perform tasks.

The docking units 206 are universally able to couple to different limbs 104 so that the limbs 104 are interchangeable. As such, a different type of limb 104 may be coupled to each one of the docking units 206. For example, each limb 104 coupled to the base platform 102 through the docking units 206 may include a different end effector 112 or a different number of joints, actuators, and/or degrees of freedom. In one example, the robot 100 includes two robotic limbs 104, where a first robotic limb has a first number of degrees of freedom, and a second robotic limb has a second number of degrees of freedom. The first number of degrees of freedom may be different from the second number of degrees of freedom, such that the first limb has more or fewer degrees of freedom than the second limb.

The docking units 206 may include any attachment mechanism for effectively removably attaching the limbs 104 to the platform 102. For example, the docking units may be standard grapple fixtures used in existing space systems or may be custom built for particular shape, size, and specifications of the robotic module. The docking unit 206 is fixedly attached to the base platform 102. The distal ends of the robotic limbs 104 may include similar docking units for attaching to end effectors so that the end effectors are interchangeable.

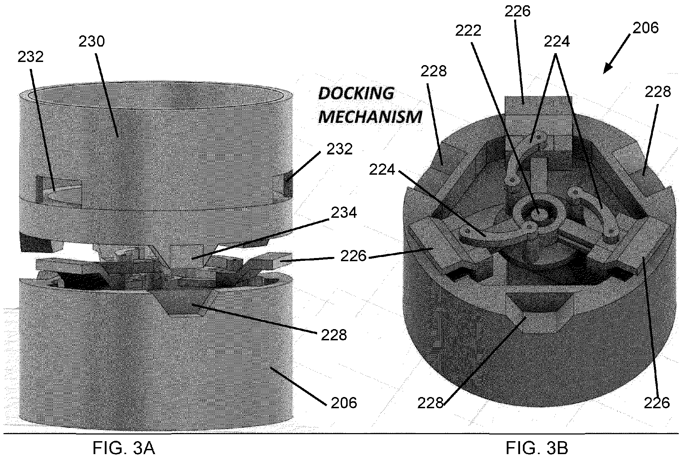

One example of a docking unit 206 is depicted in Figs. 3A and 3B. In this example, the docking unit 206 includes a motor 222 operatively coupled to linkages 224, and clips 226 that are configured to radially extend and retract. The linkages 224 are coupled to the motor 222 and the clips 226 so that, when the motor 222 rotates in one direction, the linkages 224 push the clips 226 into a radially extended position. Conversely, when the motor 222 rotates in the opposite direction, the linkages 224 pull the clips 226 back into the retracted position, which is shown in Figs. 3A and 3B. The proximal end of the robotic limb 104 includes a docking connector 230 configured to removably attached to the docking unit 206. The docking connector 230 includes slots 232 through which the clips 226 protrude when the clips 226 are in the extended position in order to couple the limb 104 to the docking unit 206 via the docking connector 230. The docking unit 206 may further include grooves 228 that align with tabs 234 on the docking connector 230 to ensure that the robotic limb 104 is properly aligned with the docking unit 206. The motor 222 can accept a serial, parallel, CAN bus, MODbus, MODbus RTU or a proprietary protocol, or wireless commands and management as slave or master, that transmits power and data to the robotic limb 104. Notably, all of the robotic limbs 104 include a docking connector 230 configured to couple to the docking units 206 so that the limbs 104 are interchangeable. The docking unit can be active (actuated by motors) to autonomously connect two components or modules of the robot, or can be passive (without a motor) for manual connection or assembly by another robotic manipulator. The distal end of the limb 104 may include a docking unit similar to docking unit 206 attached to the base platform, and the end effectors may include docking connectors similar to the docking connector 230 on the proximal end of the limb 104. In this manner, the end effectors attached to the distal end of the limbs 104 are interchangeable in the same manner that the limbs 104 attached to the base platform 102 are interchangeable.

Referring back to Fig. 2, the base platform 102 further includes a power management system 208 and a battery unit 210, including redundant units. If one battery fails, the other takes over, ensuring the mission continues uninterrupted. The batteries 210 may have additional protections. For example, the battery unit 210 may be surrounded by membranes of heating coil, cooling mechanisms such as heat pipes, heat pipes with a radiator, heat pipes with cooling fluid, or the like, to maintain optimum operating temperature.

The base platform 102 further includes a thermal management system 212 that utilizes temperature regulation mechanisms for maintaining the temperature of the robot 100 within a desired temperature range. The thermal management system 212 may include temperature sensors and temperature controllers. The temperature controller may be a Peltier device for heating and cooling. Alternatively or additionally, the temperature controller may be a heat pipe, heat pipe with radiator, a heat pipe with cooling fluid, or a combination thereof. The thermal management system 212 is configured for ensuring that the robot 100 can withstand the harsh thermal conditions of space.

The base platform 102 also incorporates sensors and a controller unit 216. The sensors may include an IMU (inertial measurement unit) 214. The controller unit 216 can handle several motors, facilitating redundancy and robustness needed for space applications. The motors (which can accept a series, parallel, CAN bus, MODbus RTU, proprietary protocol, or wireless commands) can be arranged and connected to the controller 216 in several ways, depending upon the needs, including but not limited to, daisy-chained to the controller 216. The controller 216 may be a processor and/or microcontroller, and there may be different ways of communicating between the motor and the main controller board, including but not limited to, TTL/RS485 communication. The controller 216 may utilize controller software that is specifically designed for zero gravity conditions and lighting conditions in space.

The base platform 102 may have additional protections, including but not limited to, a multi-layer insulation covering to absorb shocks during the violent and turbulent phases of satellite launch and electrical orbit raising maneuvers. Redundancy is achieved through the use of various sensors (Lidar, camera, laser, IR, radar, proximity sensors, etc.) for better estimation of the robot's position. The IMU 214 used on the robot 100 may have multiple IMU ICs put together to overcome drift error commonly observed in IMUs. Redundant motor controllers and single board computers may be included on the base platform 102 to ensure continuity of task even if there is damage to one of the components due to space conditions.

The base platform 102 may also have an attachment for payload carrying. More advanced sensors can be used to achieve better robustness and environment awareness in the space environment. A more standard coupling mechanism can be used to connect different limbs 104 to the base platform 102. Additionally, several high-performance single board computers 202 may be used for resource-hungry AI algorithms, and a hypervisor can also be used to automate the resource sharing on the base platform computers.

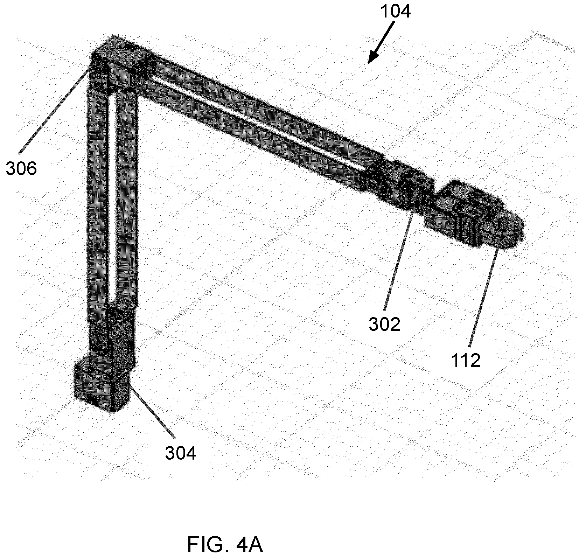

As shown in Fig. 4A, the robotic limb unit 104 is a modular structure, constructed from lightweight yet durable materials for space applications, including but not limited to, carbon fiber composites or high-grade aluminum alloys. The dimensions of each limb module 104 are optimized to balance strength, weight, and maneuverability. The degrees of freedom (DoF) of each limb 104 can be adjusted by, for example, activating or freezing some of the joints of the limb 104, or by integrating additional joints in the limb 104, in order to balance task needs with complexity and power consumption.

Each robotic limb 104 includes a distal end 302, a proximal end 304, and at least one joint 306 between the distal end 302 and proximal end 304. The proximal end 304 of the robotic limb 104 is configured to attach to the base platform 102 via the docking unit 206 on the base platform 102. As such, the proximal end 304 of each one of the limbs 104 includes a universal connector for removably coupling to the docking unit 206. One example of such a universal connector is the docking connector 230 depicted in Figs. 3A and 3B. The limbs 104 are interchangeable and each limb 104 coupled to the base platform 102 may be different from the other limbs 104. For example, each limb 104 may have a different end effector 112, a different number of actuators and joints, and/or a different number of degrees of freedom. The distal end 302 of each robotic limb 104 has a gripper end effector 112 attached thereto. Similar to the proximal end 304 of each limb 104, the distal end 302 of each limb 104 may include a universal connector so that the gripper end effectors 112 are interchangeable. In one example, the universal connector on the distal end 302 of each limb 104 is similar to the docking unit 206 and connector 230 depicted in Figs. 3A and 3B.

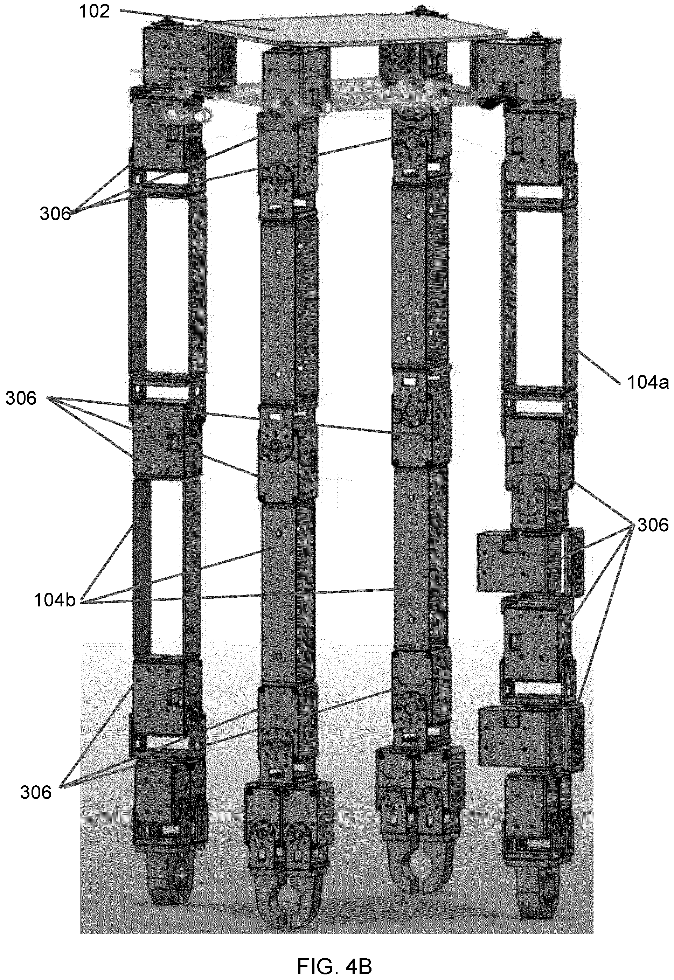

Fig. 4B illustrates one example of a base platform 102 having four robotic limbs 104 coupled thereto. One of the robotic limbs 104a is different from the other robotic limbs 104b in that the robotic limb 104a has an increased number of joints 306 and thus an increased number of degrees of freedom compared to the other robotic limbs 104b. It will be well understood by one of ordinary skill in the art that each one of the robotic limbs 104 may be different from the others, depending on the tasks that the robot 100 may need to perform.

The limb modules 104 are designed to interface with the base platform 102 through standardized attachment points (docking units 206) and communication protocols. Within each limb module 104, advanced actuators, including, but not limited to, brushless DC motors, provide precise control over joint movements. Sensors, including encoders and force/torque sensors, are integrated into each joint to enable real-time feedback and closed-loop control. The modular nature of the limbs 104 allows for scalability, enabling the robot 100 to accommodate additional limbs 104 for increased dexterity and task specialization as needed.

Each limb module 104 may house a modular single board computer (SBC) along with secondary servo controllers in each of the motors. The SBC in the limb 104 connects to the SBC 202 in the base platform 102, facilitating communication through channels such as Wi-Fi, Li-Fi, Bluetooth, ethernet, Space Wire, RS 485/TTL, etc. The SBC also connects to a camera and local sensors in the gripper unit 112 of the modular limb 104. The limb module 104 is self-contained with its own battery for power. Each limb 104 also features a plug-and-play electromechanical connector that enables it to connect to the base platform 102 with mechanical, thermal, data, and power coupling. Furthermore, each limb 104 may have additional protections, including but not limited to, insulation to protect it from thermal, mechanical, and radiation extremes.

The modular limb 104 attached to the base platform 102 may be used as a leg to move around or as an arm that can perform assembly, service, and maintenance tasks. As such, the end effectors 112 attached to the distal end 302 of the limb 104 may be locomotion end effectors or tool end effectors, as discussed in further detail below. Other potential limb mechanisms may vary in terms of the number of degrees of freedom, gripper design, and their role in the mission of the space robot. For instance, some space arms are designed to move cargo to an assembly site under external command and controlled by a human astronaut, as well as to transport astronauts from one site to another.

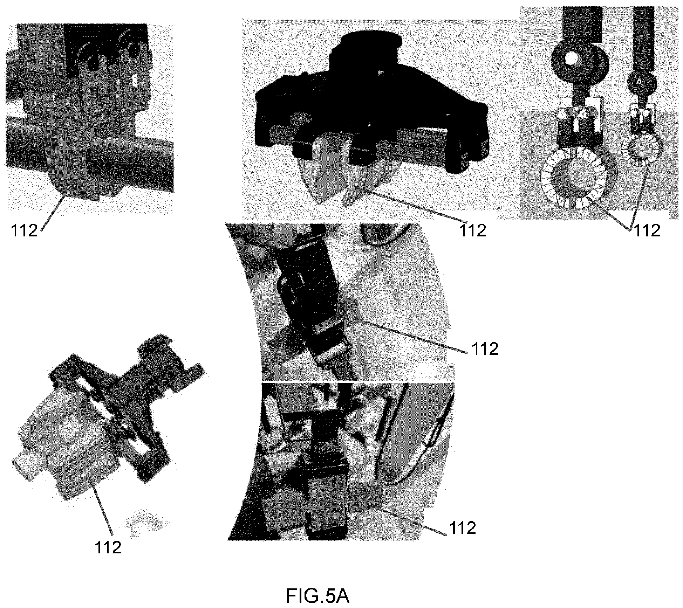

Fig. 5A depicts different examples of locomotion end effectors 112 that may be attached to the distal ends 302 of the robotic limbs 104. In some examples, the locomotion end effectors 112 are gripper units 112 that may be pincer grippers, such as claws, clamps, clips, fingers, or the like, and may be configured for grasping tubular elements, such as rails, railings, handles, truss structures, or the like. These units 112 can be equipped with grippers and footprints of different shapes and sizes, allowing for a versatile range of grasping and stability capabilities. Each gripper unit 112 includes a secondary controller, motor, and a set of local sensors, which facilitates accurate grasping of objects, particularly truss structure elements 116. The ability to attach different footprints enhances the unit's grip and stability, depending on the object it needs to grasp or the shape it needs to traverse.

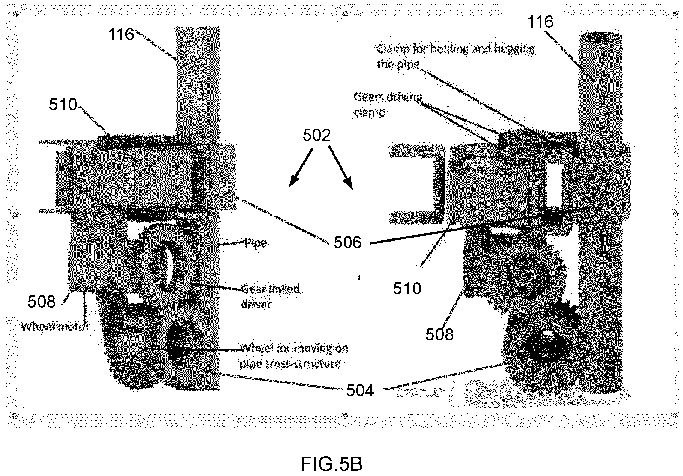

As shown in Fig. 5B, the end effector may be a wheel-based locomotion mechanism 502 for moving on long rail or tubular structure 116 in a more efficient manner. Such a wheel-based mechanism includes a wheel 504 in the center and a pair of clamps 506 on the side to hold the rail or tubular structure 116 in a zero gravity environment in orbit. Switching between wheel-based locomotion and gripper-based locomotion may be autonomously achieved by the robot 100 using the hybrid locomotion mechanism 502, which allows the robot to activate different motors to command the wheels or gripper using the wheel motor 508 or the gripper motor 510, respectively.

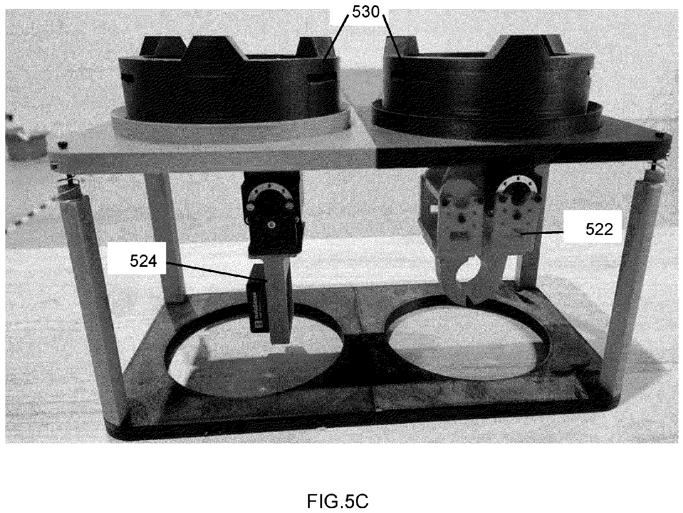

The end effector attached to the distal end of the limb 104 may alternatively be a tool end effector, such as a gripper, a camera, a screw driver, a hammer, or a laser module. In this manner, the limb 104 may have a locomotion end effector and be used as a leg, or may have a tool end effector and be used as an arm. As shown in Fig. 5C, the tool end effector may include a gripper 522 or a camera 524. The end effectors 522, 524 may include docking connectors 530, similar to the docking connectors 230 described above, so that the end effectors can be interchangeably coupled to the distal end of the limb 104.

The gripper unit 112 features several modular designs, each suited to specific tasks such as grabbing onto structures or carrying payload structural elements. The baseline design includes two motors connected to claws, ideal for holding onto cylindrical objects. Additional gripper designs may have no motor or one or more motors and work actively or passively with spring mechanism to locomote and do servicing tasks. Some grippers employ flaps and reactive impedance control, enabling them to grasp objects of varying stiffness, hardness, size, or shape. This control measures the amount of load current and adaptively thresholds it to grasp onto an object.

In another design, the gripper 112 is coupled with gears, enabling the gripper unit to have additional locomotion mechanisms. Yet another design includes physical limiters on the gripper to prevent over-grabbing of a truss element. To enhance accuracy and prevent over-grabbing, the gripper is equipped with sensor units, including laser sensors and a time-of-flight camera, stereo, monocular, lidar, or the like, to estimate the range of the object to be grabbed.

The gripper 112 features multiple range laser, IR sensors, and/or cameras like stereo, monocular, lidar, time of flight, etc., to detect obstacles and prevent collisions, or to identify favorable truss structure elements to grasp. The central range sensor on the gripper 112 measures the distance from the object, while peripheral sensors assist with alignment and centering the gripper 112. The gripper 112 may also house its own modular controller, allowing it to plug and play into the base of the robot 100. The end effectors 112 of each limb 104 feature advanced gripping mechanisms capable of adapting their opening or closing strategy based on readings from mounted sensors, including proximity sensors.

Alternatives to the robotic gripper unit 112 include gripper units equipped with multiple tools and more advanced sensing and control mechanisms. Another alternative could include the ability for the gripper unit to automatically change tools as needed.

The robot 100 may incorporate various sensors at the base platform 102 and at the end effector 112 of the limb 104, along with joints and actuators to achieve the desired degrees of freedom for each limb 104. These sensors can include, but are not limited to, optical, proximity, temperature, pressure, and force sensors. The sensors provide feedback for the robot's control system, enabling precise control of the robot's movements and interactions with its environment.

The thermal management of the robot 100 can be achieved through different means, including, but not limited to, temperature sensors and temperature controllers such as Peltier devices for cooling and heating. Such mechanism may be integrated into both the base platform 102 and the end effector 112 of the limb 104. These coolers, in conjunction with the temperature sensors, allow for the regulation of the robot's temperature, ensuring optimal performance under a wide range of environmental conditions in space.

The robot's communication system 204 employs an error-correcting protocol to ensure the integrity of data transmission and security encryption. This protocol includes a cyclic redundancy check, which verifies the accuracy of the command packets being sent. If an error is detected, the system 204 automatically resends the packet, ensuring reliable communication between the robot's components.

The robot features redundant transmission mechanisms, both in hardware and software. The motors may be daisy-chained and/or cross-chained with redundant wiring over the motor's ports. This redundancy ensures that even if one wire is damaged, there is still a communication line between the motor controller and the high-level single board computer.

The robot incorporates a current torque limiting feature, which allows for impedance control. This feature prevents damage to the robot 100 and the spacecraft 114 by limiting the motor's current and voltage in the event of a mechanical obstacle. This protection is embedded in the motors and is also present at the power management controller, which includes polarity checking and surge voltage and current protection.

The robot 100 may also include additional microprocessors at different parts of the robot 100, outside of the base platform 102, depending on the requirements. These microprocessors can distribute the computational needs for tasks of control and perception, among others, ensuring efficient operation of the robot 100.

### Additional Considerations

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and Bis false (or not present), A is false ( or not present) and Bis true ( or present), and both A and B are true ( or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and/or a process associated with the disclosed principles herein. Thus, while particular embodiments and applications have been illustrated and described, it is to be understood that the disclosed embodiments are not limited to the precise construction and components disclosed herein. Various apparent modifications, changes and variations may be made in the arrangement, operation and details of the method and apparatus disclosed herein without departing from the spirit and scope defined in the appended claims.

## Claims

1. A mult-limb robot comprising:
a base platform having a plurality of docking units;
at least two robotic limbs, each robotic limb having a distal end and a proximal end configured for being removably attached to one of the docking units; and
at least two locomotion end effectors, each one of the locomotion end effectors being coupled to the distal end of a respective one of the robotic limbs, wherein each locomotion end effector is independently configured for holding onto elements of a structure in space to achieve locomotion in different directions.

2. The multi-limb robot of claim 1, wherein each one of the locomotion end effectors comprises a gripper, a clamp, a wheel, or a combination thereof.

3. The multi-limb robot of claim 1 or 2, wherein the base platform comprises a power source, a power management module, a single board computer, a communication unit, an inertial measurement unit, a controller unit, and a thermal management module.

4. The mult-limb robot of any of claims 1 to 3, wherein each one of the robotic limbs comprises one or more joints and actuators positioned between the distal end and the proximal end, the joints and actuators configured to provide desired degrees of freedom for the robotic limb.

5. The multi-limb robot of any of claims 1 to 4, wherein the at least two robotic limbs comprises a first robotic limb having a first number of degrees of freedom, and a second robotic limb having a second number of degrees of freedom, wherein the first number is different from the second number.

6. The multi-limb robot of any of claims 1 to 5, wherein the multi-limb robot comprises at least four robotic limbs.

7. The multi-limb robot of any of claims 1 to 6, wherein each one of the locomotion end effectors is a pincer gripper.

8. The multi-limb robot of any of claims 1 to 7, wherein the at least two locomotion end effectors are claws, clamps, fingers, or clips, and are configured for grasping tubular elements.

9. The multi-limb robot of any of claims 1 to 8, further comprising a thermal management system configured for maintaining a temperature of the robot within a desired range, the thermal management system comprising at least one temperature sensor and at least one temperature controller.

10. The multi-limb robot of claim 9, wherein the temperature controller is a Peltier device, heat pipe, heat pipe with radiator, a heat pipe with cooling fluid, or a combination thereof.

11. The mult-limb robot of any of claims 1 to 10, further comprising a communication module configured for transmitting information to and receiving information from a spacecraft associated with the robot.

12. The multi-limb robot of any of claims 1 to 11, wherein each one of the docking units is an active docking unit or a passive docking unit.

13. The multi-limb robot of any of claims 1 to 12, wherein the distal end of each one of the robotic limbs comprises an end effector docking unit and the locomotion end effectors are coupled to the distal end of the robotic limb through the end effector docking unit such that the locomotion end effectors are interchangeable.

14. The multi-limb robot of any of claims 1 to 13, further comprising:
a robotic arm removably coupled to one of the docking units on the base platform, wherein the robotic arm comprises a robotic arm distal end; and
a tool end effector removably coupled to the robotic arm distal end.

15. The multi-limb robot of claim 14, wherein the tool end effector comprises a gripper, a camera, a screw driver, a hammer, or a laser module.
